# EUROPEAN PATENT APPLICATION

(11) **EP 4 195 072 A1**
(43) Date of publication of application: **14.06.2023**
(21) Application number: 21383128.2
(22) Date of filing: 10.12.2021
(51) Int. Cl.: G06F 16/951

(54) **METHOD, SYSTEM AND COMPUTER PROGRAMS FOR DETECTING ONLINE FAKE INFORMATION ITEMS**

(71) Applicant: Telefonica Digital España, S.L.U., 28013 Madrid (ES)
(72) Inventor: Papadopoulos, Panagiotis, 28013 Madrid (ES); Kourtellis, Nicolas, 28013 Madrid (ES)
(74) Representative: Carlos Hernando, Borja

(57) **Abstract**

A method, system and computer programs for detecting online fake information items are proposed. The method comprises collecting a plurality of information items from a plurality of websites using a cloud server; extracting, by the cloud server, structural, traffic and network features of each website of the plurality of websites, without analyzing any content of the information items, obtaining a feature dataset for each website as a result; executing, by the cloud server, a selection process on each feature dataset based on a performance and size criteria, obtaining a best-feature dataset for each website as a result; generating, by the cloud server, a filterlist including detected fake information items by means of executing a machine-learning classification process on each best-feature dataset.

## Description

### Technical Field

The present invention relates to automated detection methods and systems. In particular, the invention relates to a method, system and computer programs for detecting fake information items (e.g., news, online articles, etc.) and other misinformation, through network and structural characteristics per information items website.

### Background of the Invention

Detecting fake news publishing sites is of paramount importance and consequently, it has drawn the attention of the research community. In [1], authors perform deception detection by employing Linguistic Inquiry and Word Count (LIWC) to investigate the role of individual words in a document. They evaluate their approach, and they show that it is nearly 90% accurate. In [2], the authors set out to explore (a) how to effectively combine information from multiple sources for fake news detection and (b) how to discriminate between degrees of fakeness mathematically. Specifically, the authors propose a Multi-source Multi-class Fake news Detection (MMFD) framework via which they introduce an automated and interpretable way to integrate information from multiple sources and provide a principled approach to discriminate between degrees of fakeness mathematically. MMFD coherently incorporates automated feature extraction, multi-source fusion and degrees of fakeness discrimination.

In [3], the authors propose a model that achieves an accurate and automated prediction by combining three characteristics of a given article: (a) its text, (b) the user response it receives, and (c) the source users promoting it. They incorporate the behavior of both parties, users and articles, and the group behavior of fake news propagating users. Their approach has 3 modules: (i) the first one is based on the response and text and uses a Recurrent Neural Network to capture the temporal pattern of user activity on a given article, (ii) the second learns the source characteristic based on the behavior of users, and (iii) these two are integrated with the third module to classify an article as fake or not.

Check-it in [4] constitute an ensemble method that combines different signals to generate a flag about a news article or social media post. The aforementioned signals are the domain name, linguistic features, reputation score and others. The News Landscape (NELA) toolkit in [5] allows users to explore the credibility of news articles using well-studied content-based markers of reliability and bias, as well as filter and sort through article predictions. In [6], the authors conduct a temporal and traffic analysis of the network characteristics of fake new sites (user engagement, lifetime, etc.) and propose a methodology to study how websites may be synchronizing their alive periods, and even serving the exact same content for months at a time. They detect numerous clusters of websites synchronizing their uptime and content for long periods of time within the USA presidential election years 2016-2017. By building upon their findings, they propose a machine learning based classifier for automatic detection of fake news websites that are not yet included in manually curated blacklists, thus achieving F1 score up to 0.942 and AUC of ROC 0.976.

In [7], the authors collected a decade-long dataset of 12.8K manually labeled sites which also includes detailed analysis report and links to source documents for each case. As a next step, they investigate automatic fake news detection based on surface-level linguistic patterns and design a novel, hybrid convolutional neural network to integrate meta-data with text, thus showing that this hybrid approach can improve a text-only deep learning model. In [8], authors study the characteristics of hyper-partisan news sites in terms of the differential third party tracking of users with different demographics (i.e., gender, age). Fake Detector [9] is an automatic fake news credibility inference model for social networks that, based on a set of explicit and latent features extracted from the textual information, builds a deep diffusive network model to learn the representations of news articles, creators and subjects simultaneously.

In [10], the authors propose a proactive algorithm to uncover redirection networks in real-time given a small set of seed domains. Their work (1) collects redirection paths, (2) clusters domains that share common nodes along redirection paths, and (3) searches for other domains co-hosted on similar IP addresses. They evaluate their method using real websites that were discovered while auditing 2300 popular fake news websites and uncover three large-scale redirection campaigns and verified that 91% of entry point domains were recently expired, re-registered, and parked on dedicated hosts.

However, considering the sheer volume of fake news sites spawning in short period of time, and especially during notable events such as the USA presidential elections 2016 and 2020 [6], as well as the COVID-19 pandemic [11]), it is apparent that manual fact checking is not scalable. Interestingly, there is a significant body of research aiming to provide automated misinformation detection by exploiting textual or content characteristics of published articles [1-10]. Albeit important proposals for detection, linguistic analysis has specific limitations arising from the language barriers and quick adaptation of posters or content producers to detection methods. Indeed, automated machine learning-based fake news detection systems need to be trained on text in a specific language to be highly performant. However, with the majority of annotated articles and other computational resources in data and models focused on the English language, a large portion of news websites across the world are left unchecked.

New content-agnostic fake information detection methods and systems are therefore needed.

### Description of the Invention

An object of the present invention is thus to provide a method, system and computer programs for detecting online fake information items.

This object is fulfilled by a method with the characteristics of claim 1, a system with the features of claim 11 and by a computer program with the features of claim 13.

The proposed solution is content-agnostic and can be enforced either at an Internet Service Provider (ISP)-side for easier scalability and maintenance or at a user-side for better end-user privacy. In comparison to the solutions of the prior art, present invention considers new and unstudied features per website. In particular, the present invention does not rely on the content, reputation, authors, sentiment, etc., of the article, as previously mentioned studies do. Instead, the proposed solution/technology relies on the website's network and structural characteristics that can be readily available while the website is being browsed by the end user. Furthermore, the content-agnostic approach is not limited by language barriers and can operate across any country or language region.

Embodiments of the present invention provide, according to one aspect, a method for detecting online fake information items. The method comprises collecting a plurality of information items from a plurality of websites using a cloud server; extracting, by the cloud server, structural, traffic and network features of each website of the plurality of websites, without analyzing any content of the information items, obtaining a feature dataset for each website as a result; executing, by the cloud server, a selection process on each feature dataset based on a performance and size criteria, obtaining a best-feature dataset for each website as a result; and generating, by the cloud server, a filterlist including detected fake information items by means of executing a machine-learning classification process on each best-feature dataset.

According to the invention, the structural, traffic and network features can include IP-related activity; DNS-related activity; DOM-related details; and/or HTTP-related details.

In an embodiment, the method further comprises periodically updating the generated filterlist, generating an updated filterlist as a result of each periodical update.

In an embodiment, the method further comprises enforcing the generated filterlist or the updated filterlist either by the cloud server or by a user's web browser.

In some embodiments, before the extracting step, the collected plurality of information items are preprocessed by means of summarizing the HTTP status codes into groups; inputting missing data values to the collected plurality of information items; and/or normalizing scores within the collected plurality of information items.

In some embodiments, before the generating step, the cloud server also collects different descriptions (i.e., explanations) about the plurality of websites provided by different third parties. In this case, for a description to be considered reliable for a given website it needs to be similarly reported by two or more different third parties.

The machine-learning classification process can include implementing one or more of the following algorithms: Random Forest, Logistic Regression, Naive Bayes, deep learning algorithm based on a simple or deep Neural Network architecture or Hoeffding Trees.

In an embodiment, the selection process involves using a Recursive Feature Elimination (RFE) algorithm, with a logistic regressor as fitted estimator.

In some embodiments, the collecting step is performed continuously. For example, the collecting step can comprise crawling each website of the plurality of websites; retrieve data about each website's historical DNS activity; and retrieve data about the activity of a website's IP host.

Present invention also proposes, according to another aspect, a system for detecting online fake information items, the system comprising a cloud server configured to collect a plurality of information items from a plurality of websites; extract structural, traffic and network features of each website of the plurality of websites, without analyzing any content of the information items, obtaining a feature dataset for each website as a result; execute, a selection process on each feature dataset based on a performance and size criteria, obtaining a best-feature dataset for each website as a result; generate, a filterlist including detected fake information items by means of executing a machine-learning classification process on each best-feature dataset.

In an embodiment, the cloud server is also configured to periodically update the generated filterlist, generating an updated filterlist as a result of each periodical update. The generated filterlist or the updated filterlist can be further enforced by the cloud server. Alternatively, or complementarily, the system can also include a user's web browser which can enforce the generated filterlist or the updated filterlist.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

The present invention has showed that the proposed technology achieves high Precision, Recall, and F1 scores (all above 91%) and AUC score (0.967). The invention is applicable in a real-time setting, where features available only at run-time are used, with 82% Prevision and Recall and 0.86 AUC.

### Brief Description of the Drawings

The previous and other advantages and features will be more fully understood from the following detailed description of embodiments, with reference to the attached figures, which must be considered in an illustrative and non-limiting manner, in which:
Fig. 1 illustrates a high-level overview of the present invention when deployed with filtering performed at user side.
Fig. 2 illustrates a high-level overview of the present invention as an ISP service, where the filterlist is applied on the ISP network traffic directly.

### Detailed Description of Preferred Embodiments

Present invention can be deployed in two different ways, based on how the filtering of fake information items will be enforced in real time: (i) at the user side, or (ii) at the ISP side. The key components in both approaches include a Feature Collector element/module/component which includes data/information collection and (optionally) preprocessing and a fake news classifier element/module/component with its machine learning modeling parts.

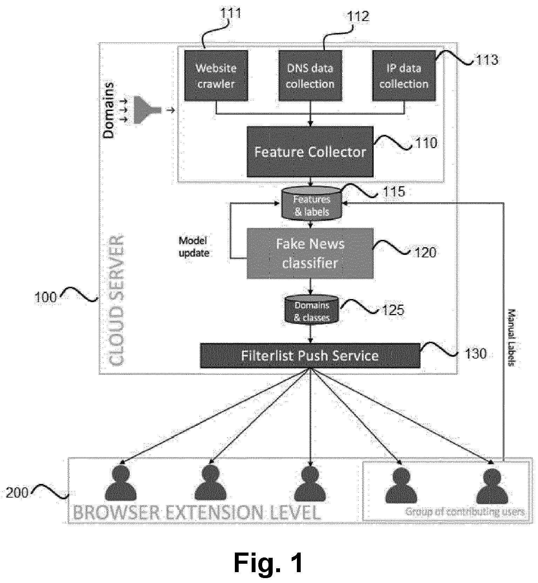

With reference to Fig. 1, therein the invention architecture when deployed with filtering performed at user side is showed. In this case, the invention can be deployed as a centralized service where users get to evaluate a visited website whether it is fake information or not, by using a filterlist that is delivered to them. This service can be maintained either by a private company, where users pay for the service, or anon-profit organization. As seen in the figure, in this deployment scenario, the invention consists of two main components: (1) a cloud server 100 that is responsible for the filterlist generation and maintenance, and (2) a browser extension 200 that resides in the users ' browsers and is responsible for retrieving periodically the updated filterlist and use it to flag the visited website as fake information or not. For the filterlist generation, the cloud server 100 can particularly employ several different interconnected micro-services/entities that include the Feature Collector 110, the Fake News Classifier 120, and the Filterlist Push Service 130.

The Feature Collector 110 can control numerous data/information collecting modules 111-113 that collect information on websites by crawling each website (e.g., its DOM structure, SSL characteristics, HTTP headers/ redirections and status codes, number of 1st and 3rd party requests to analytics/ advertisers, rendering timings, number of included images/fonts/CSS, number of analytics IDs shared with other affiliated websites, etc.); retrieve data about each website's historical DNS activity (e.g., frequency of zone file changes, zone age, number of DNS transactions, historical domain hosts, amount of in-formation provided by the registrant, number of times the domain is parked, etc.); and/or retrieve data about the activity of the website's IP host (e.g., frequency of IP changes of host, number of neighboring domains of the same host, geolocation of host's IP, etc.).

In some embodiments, the information collection process of the Feature Collector 110 is continuous to progressively extract features for every website on the Web. The Fake News Classifier 120 is trained to detect fake information sites based solely on features extracted by collected structural, traffic and network characteristics (see Table 2), without attempting any content related analysis. The Fake News Classifier 120 gets as input the features extracted, selected, and stored by the previous module, Feature Collector 110. The results of the classifier form a filterlist, which includes the currently detected fake information sites across Web. In some embodiments, this filterlist gets updated periodically, and the Filterlist Push Service 130 is responsible for compressing and delivering the deltas (i.e., changes from the previously deployed version) to the users ' browser extensions.

To keep the Fake News Classifier's accuracy high, a model re-trainer component/module 115 can collect descriptions/labels (i.e., website delivers fake/not fake content) manually provided by users who contribute them via their browser extension. According to the invention, for a new label to be considered as reliable for a given website, it needs to be similarly reported by a certain number of different users. This helps the invention avoid users that maliciously or accidentally report wrong label for a website. This user side filtering approach enables the invention to provide:
- Preservation of User Privacy: The websites that a user is visiting while browsing can leak valuable information about their interests/ preferences, which in some cases can be sensitive (i.e., political/sexual preferences, religious beliefs, health issues). The sites' data processing and classification take place in a centralized manner on the cloud server 100, thus composing a global filterlist with the outcome. However, the enforcement of this list takes place locally, on each user's web browser, to avoid leaking the websites the user is visiting to the centralized cloud server 100.
- Negligible Response Time: Delivering the filterlist to the users' browsers for user side fake information filtering guarantees a practically negligible response time, which has been proven to provide the best possible user experience.

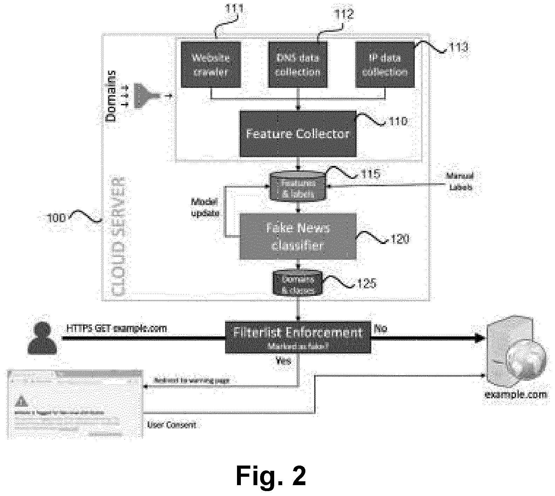

With reference to Fig. 2, therein the invention architecture when deployed with filtering performed on the ISP side is showed. In this case, the ISP is responsible not only for maintaining the cloud server 100 that generates the periodic filterlist, but also for the automatic enforcement of such list on the network traffic of its users, in real-time. This way, the ISP, who already has access to the browsing history of the user, monitors and automatically blocks access (e.g., as in the case of phishing/terrorist sites, etc.) or redirects the user's browser to a page that warns them about the flagged-as-fake information site they are about to browse. The users then can choose to continue with their visit, or to move away from the site, in an analogous manner as they get to choose in case of a website with an invalid certificate [12]. Crucially, this ISP side approach works in both HTTP and HTTPS traffic, since the method only needs to know the top-level domain visited by the user, and not the exact URL and the article content.

Overall, this deployment scenario allows the present invention to be immediately applicable as it is deployed centrally by the ISP, and requires zero effort from the users, thus removing the necessity to download, install and keep up to date a user-side browser extension, and to protect more users at once, similar to phishing and malware sites, ISP side blocking may be critical for protecting (unaware) customers and their infrastructure or well-being from harmful content.

In the present invention, the classification problem at hand can be assumed binary: that is, if a site (i.e., its top-level domain publishing it) is considered publishing fake or real news. Moreover, the features that are developed and used for the classification task depart from the state-of-the-art, and instead reflect the several types of information items collected (as shown in Table 2) that regard the network, traffic, and structural characteristics of each website. Such collected information items can be additionally preprocessed before being used to train the machine learning classifier 120. In an embodiment, this preprocessing involves several steps, including: summarization of HTTP status codes into groups: e.g., status codes are grouped together into the 2** group, imputation of missing data values, where appropriate, and normalization of scores within each batch of data used at training for all numeric features across all domains (e.g. if the number of a feature for domain X is 4, and the minimum across all domains for this feature is 2 and the maximum is 100, then the normalized score of X can be (4-2)/(100-2)).

In a particular embodiment, a total number between 150 and 200 features are computed per website, extracted by the collected information items. However, because not all the features have the same importance in this classification task a feature selection process takes place before the Fake News Classifier 120 is trained, to keep the features that contribute the most in solving the specific binary classification problem. This step is important as it can remove features that not only do not correlate with the class labels at hand, but instead may be adding noise to the whole classification process. Thus, in an embodiment, the present invention uses the Recursive Feature Elimination (RFE) algorithm for the selection process. Moreover, the present invention selects the top K features that provide the best trade-off between machine learning performance and size of feature set to be processed. It should be noted that instead of the RFE algorithm other feature selection algorithms, with a logistic regressor as fitted estimator, can be equally used.

The algorithm of the Fake News Classifier 120 can be any standard machine learning classifier such as Random Forest, Logistic Regression, or Naive Bayes. Also, more advanced, Deep Learning methods can be used based on simple or deep Neural Networks (NN) architectures. All the above methods are batch-based processing machine learning classifiers. That is, they are trained on a batch of data already collected and pre-processed, and can be considered "frozen", i.e., they will not change. On the other hand, streaming machine learning methods such as Hoeffding Trees and others can be applied, if the expectation is that the data (manual labels and features extracted per website) are to be updated regularly. For example, and as shown in Figs. 1 and 2, manual labels (i.e., "fake" or "real" label for specific website) from external collaborators and contributors can be sent to the system. Each label, along with information collected for the specific website can be consolidated in the existing pool of data and can be used by the streaming Fake News Classifier 120 in an online fashion.

**Table 1. Summary of the dataset**

| **Type** | **Volume** |
|---|---|
| Total sites crawled | 1820 |
| Real news sites | 1183 |
| Fake news sites | 637 |
| Number of features | 187 |

To obtain the necessary ground truth for the Fake News Classifier 120, in an embodiment present invention utilizes the list of manually curated websites of Media Bias Factcheck [13]. Specifically, as presented in Table 1, the present invention comprises retrieving a set of 1820 that includes 1183 and 637 sites manually verified as real and fake information, respectively. By developing a puppeteer crawler, present invention comprises visiting each one of these sites and extract from their landing page their DOM tree, their HTTP traffic, their cookie jar, the memory usage patterns of the JS engine (e.g., total and used JS heap size), the resources they use (e.g., images, CSS, js, etc.) and their sizes in bytes, HTTP headers, the number of included frames and JSEventListeners, the number of 1x1 pixels (i.e., web beacons) they use, and their rendering timings. Next, present invention comprises retrieving historical metadata about the domain registration, DNS record information and propagation, accessibility from different geolocations via ping, the IP hosting server, other websites using the same Analytics IDs, other websites hosted by the same server and many more, from third party services such as Hosterstats [14], Whoisology [15], Spyonweb [16] and Viewdns.info [17]). Finally, present invention comprises storing all the raw information items in a PostgreSQL database for further analysis.

As a next step, present invention can process the raw information items collected to (i) classify the HTTP traffic to Advertising, Analytics, Social, third-party widgets via using the popular Disconnect filter list [18]. Additionally, (ii) extract the HTTP redirection patterns and the rest of the responded status codes, (iii) the frequency of IP changes of the hosting server, (iv) identify the age of the domain, the number of times it is parked and re-registered, (v) differentiate the first- and third-party cookies, (vi) the distribution of the different DOM elements of the page (e.g., number of DIVs, buttons, sections, paragraphs, links etc.). Consequently, present invention created a vector of a given number of features (preferably between 150 and 200) for every (real and fake) website in the dataset.

**Table 2: Top 35 features selected with RFE algorithm.**

| **Data Type** | **Features** | |
|---|---|---|
| IP-related activity | IP_change_after_max | Max number of days the domain is using the same IP |
| | IP_age_days | Days that Domain is using this IP |
| DNS-related activity | domain_birth | Date that domain is created |
| | domain_age_days | Domain age in days |
| DOM-related details | domLoading | Time when the parser started its work, that is when its Document.readyState changes to 'loading' and the corresponding readystatechange event is thrown. |
| | domContentLoadedEventStart | Time that DOM content loaded event started |
| | domContentLoadedEventEnd | Time that DOM content loaded event ended |
| | domComplete | Time when DOM rendered completely |
| | domInteractive | Time when DOM became interactive |
| Webpage-related details | LayoutObjects | Number of CSS layout objects |
| | Nodes | Number of DOM nodes |
| | JSHeapUsedSize | Size of heap used by JS |
| | JSHeapTotalSize | Total Size of heap available for JS |
| | FirstMeaningfulPaint | Time of first component rendered |
| | HTML_classes | Number of HTML classes |
| | page_size | Total size of web page in bytes |
| | image_size | Total size in bytes of image files |
| | css_size | Total size in bytes of CSS files |
| | text_size | Total size in bytes of HTML files |
| | js_size | Total size in bytes of JS files |
| | audio_size | Total size in bytes of audio files |
| | video_size | Total size in bytes of video files |
| | total_coownedSites | Total number of co-owned domains |
| | numOfsites_coowned_analytics | Number of co-owned domains based on embedded analytics IDs |
| | domainLookupEnd | Time when the domain lookup starts |
| | domainLookupStart | Time when the domain lookup starts |
| | connectStart | Time when socket opened |
| | connectEnd | Time when socket closed |
| HTTP-related details | secureConnectionStart | Time when SSL started |
| | fetchStart | Time when fetch started |
| | responseStart | Time when response receiving started |
| | responseEnd | Time when response receiving ended |
| | requestStart | Time when request sending started |
| | loadEventEnd | Time when the load event handler terminated |
| | loadEventStart | Time when the load event handler started |

According to a particular embodiment, present invention uses the RFE algorithm, with a logistic regressor as fitted estimator. In this embodiment, the invention comprises extracting a total of 187 features per website, from the collected information items. Then the RFE algorithm is run to select top K, with *K* ∈ {5, 10, ..., 187}. Present invention identified that a subset of K=35 features provide the best trade-off between machine learning performance and size of feature set to be processed. This subset allows for reduced machine learning loss in the Fake News Classifier 120 and highest test accuracy, while being the smallest set of features to be processed. These top features selected can be found in Table 2, organized into categories, or families of features. From this feature selection process, it was noted that there are prominent features from all data source types. That means the proposed classification system would need these different data crawls for the websites to be classified. A split of the data (35 selected features for the 1822 websites) into 60% for training, 20% for validation, and 20% for testing was also performed.

In an embodiment, the Fake News Classifier 120 is a Neural Network (*NN*) classifier that has the following layered architecture: L1: Feature/Input layer, L2: Batch Normalization layer, L3: Dense Layer (relu activation function) with 8 neurons, L4: Dropout layer (rate=0.1) and L5: Classification/Output layer.

Particularly, the above mentioned *NN* architecture was implemented using the *Tensorflow Keras* framework, version 2.5.0. The invention allowed the network to train for 10 rounds and 50 epochs each. Average accuracy and average loss was measured for each round. The configuration with optimal results offered an average accuracy of 0.9244 and average loss of 0.2436.

**Table 3: Performance metrics from machine learning binary classification of news websites: 0: likely to be hosting real news content; 1: likely to be hosting fake news content.**

| **Method** | **TP Rate** | **FP Rate** | **Precision** | **Recall** | **F1** | **AUC** |
|---|---|---|---|---|---|---|
| Random Forest (RF) | 0.916 | 0.099 | 0.916 | 0.916 | 0.916 | 0.967 |
| Logistic Regression (LR) | 0.909 | 0.109 | 0.909 | 0.909 | 0.909 | 0.944 |
| Naive Bayes (NB) | 0.805 | 0.271 | 0.801 | 0.805 | 0.800 | 0.856 |
| Neural Net (35x20x2) | 0.912 | 0.107 | 0.912 | 0.912 | 0.912 | 0.936 |

For completeness, other machine learning classifiers were also experimented. A comparison of their performance is showed in Table 3, on different performance metrics, as weighted averages across the two classes. It can be noted that, in comparison with the more advanced NN-based classifiers, even classical machine learning classifiers like Random Forest or Logistic Regression can perform very well in classifying the fake from real news websites. In fact, the Random Forest classifier demonstrates very high True Positive (TR) and very low False Positive (FP) rates, very high Precision, Recall and F1 scores, and very good Area Under the Receiver Operating Curve (AUC), which compares remarkably with the Neural Network classifier, and with even better AUC than the NN. These results demonstrate that the proposed method of collecting and selecting such data features can be of crucial value in classifying fake from real news websites, without the need to analyze the content of the articles themselves.

Finally, present invention attempts a classification task which uses only the information items per website that is available by the system at run-time, in order to perform real-time detection of fake or real news. This means the system (and to an extent the Fake News Classifier 120) cannot use data sources that require previous crawling and processing, nor data sources which need to be crawled at run-time. Instead, the system would use this real-time machine learning classifier 120 to assess the label of the website based on the data that are available during the access of the website by the end user. Of the top 35 attributes found to be most helpful in the binary machine learning task, 27 are available at run-time. That is, the 8 features related to IP and DNS activity were excluded and the machine learning classification task was repeated with the rest of top features.

**Table 4: Performance metrics from machine learning binary classification of news websites, using real-time available features only.**

| **Method** | **TP Rate** | **FP Rate** | **Precision** | **Recall** | **F1** | **AUC** |
|---|---|---|---|---|---|---|
| Random Forest (RF) | 0.819 | 0.294 | 0.826 | 0.819 | 0.808 | 0.867 |
| Logistic Regression (LR) | 0.747 | 0.378 | 0.741 | 0.747 | 0.732 | 0.747 |
| Naive Bayes (NB) | 0.668 | 0.478 | 0.648 | 0.668 | 0.647 | 0.656 |
| Neural Net (35x20x2) | 0.745 | 0.376 | 0.738 | 0.745 | 0.731 | 0.769 |

Table 4 demonstrates the results for some basic machine learning classifiers, as well as an *NN*-based classifier. It can be seen that a Random Forest classifier can maintain a competitive performance with more than 81% Precision and Recall, in detecting fake from real news websites, and in fact performs better than some simple Neural Network-based machine learning classifiers. In particular, these results show that the proposed method, data features considered, and the overall pipeline proposed can detect fake news websites even at run-time with good accuracy (almost 82%). Indeed, while the end users are browsing the Web, there is no time to fetch extra information about each browsed website, but instead, the Fake News Classifier 120 has to rely on the existing information features extracted from the website browsed, i.e., from feature categories related to the DOM and webpage structure, as well as HTTP traffic-related activity. Of course, extra information can be collected in the background per new website seen by the system, in order to enrich the ground truth dataset and allow the Fake News Classifier 120 to perform even better, i.e., reach the performance scores shown above.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

### References

1. Myle Ott, Yejin Choi, Claire Cardie, and Jeffrey T. Hancock. Finding deceptive opinion spam by any stretch of the imagination. HLT '11, page 309-319, USA,2011. Association for Computational Linguistics.
2. Hamid Karimi, Proteek Roy, Sari Saba-Sadiya, and Jiliang Tang. Multisource multiclass fake news detection. In Proceedings of the 27th international conference on computational linguistics, pages 1546-1557, 2018.
3. Natali Ruchansky, Sungyong Seo, and Yan Liu. CSI: A Hybrid Deep Model for Fake News Detection, page 797-806. 2017.
4. Demetris Paschalides, Chrysovalantis Christodoulou, Rafael Andreou, George Pallis, Marios D Dikaiakos, Alexandros Kornilakis, and Evangelos Markatos. Check-it: A plugin for detecting and reducing the spread of fake news and misinformation on the web. In 2019 IEEE/WIC/ACM International Conference on Web Intelligence (WI), pages 298-302.
5. Benjamin D Home, William Dron, Sara Khedr, and Sibel Adali. Assessing the news landscape: A multi-module toolkit for evaluating the credibility of news. In Companion Proceedings of the The Web Conference 2018, pages 235-238, 2018.
6. Manolis Chalkiadakis, Alexandros Kornilakis, Panagiotis Papadopoulos, Evangelos Markatos, and Nicolas Kourtellis. The rise and fall of fake news sites: A traffic analysis. In13th ACM Web Science Conference 2021, WebSci '21, page 168-177,2021.
7. William Yang Wang. "liar, liar pants on fire": A new benchmark dataset for fakenews detection.arXiv preprint arXiv:1705.00648, 2017.
8. Pushkal Agarwal, Sagar Joglekar, Panagiotis Papadopoulos, Nishanth Sastry, and Nicolas Kourtellis. Stop tracking me bro! differential tracking of user demographics on hyper-partisan websites. In Proceedings of The Web Conference2020, WWW '20, page 1479-1490, New York, NY, USA, 2020. Association for Computing Machinery.
9. Jiawei Zhang, Bowen Dong, and Philip S. Yu. Fake detector: Effective fake news detection with deep diffusive neural network. In2020 IEEE 36th International Conference on Data Engineering (ICDE), pages 1826-1829, 2020
10. Zhouhan Chen and Juliana Freire. Discovering and measuring malicious URL redirection campaigns from fake news domains. In 2021 IEEE Security and Privacy Workshops (SPW), pages 1-6, 2021.
11. NewsGuard Technologies, Inc. Coronavirus misinformation tracking center. https://www.newsquardtech.com/coronavirus-misinformation-tracking-center/, 2021.
12. Scott Matteson. How to resolve SSL certificate warnings produced by the latest chrome update. https://www.techrepublic.com/article/how-to-resolve-ssl-certificate-warnings-produced-by-the-latest-chrome-update/, 2017.
13. Dave Van Zandt. Media bias / fact check (mbfc) https://mediabiasfactcheck.com/ 2021.
14. John McCormac. Hosterstats - knowledge from numbers. http:// www.hosterstats.com/, 2021.
15. Whoisology. Whoisology - billions of archived domain name whois records. https://whoisology.com/, 2021.
16. SpyOnWeb.com. Spyonweb.com research tool - internet competitive intelligence. https://spyonweb.com/, 2020.
17. ViewDNS.info. Viewdns.info. https://viewdns.info/, 2021.
18. Disconnect. A faster, safer internet is one click away. https://disconnect.me/, 2021

## Claims

1. A method for detecting online fake information items, comprising:
collecting a plurality of information items from a plurality of websites using a cloud server;
extracting, by the cloud server, structural, traffic and network features of each website of the plurality of websites, without analyzing any content of the information items, obtaining a feature dataset for each website as a result;
executing, by the cloud server, a selection process on each feature dataset based on a performance and size criteria, obtaining a best-feature dataset for each website as a result;
generating, by the cloud server, a filterlist including detected fake information items by means of executing a machine-learning classification process on each best-feature dataset.

2. The method of claim 1, further comprising periodically updating the generated filterlist, generating an updated filterlist as a result of each periodical update.

3. The method of claim 2, further comprising enforcing the generated filterlist or the updated filterlist either by the cloud server or by a user's web browser.

4. The method of any one of the previous claims, wherein the method, before the extracting step, comprises preprocessing the collected plurality of information items, said preprocessing including:
summarizing HTTP status codes into groups;
inputting missing data values to the collected plurality of information items; and/or
normalizing scores within the collected plurality of information items.

5. The method of any one of the previous claims, wherein the method, before the generating step, comprises using the cloud server to collect different descriptions about the plurality of websites provided by different third parties, wherein for a description to be considered as reliable for a given website it needs to be similarly reported by a two or more different third parties.

6. The method of any one of the previous claims, wherein the machine-learning classification process comprises implementing one or more of the following algorithms:
Random Forest, Logistic Regression, Naive Bayes, deep learning algorithm based on a simple or deep Neural Network architecture or Hoeffding Trees.

7. The method of any one of the previous claims, wherein the selection process comprises using a Recursive Feature Elimination, RFE, algorithm, with a logistic regressor as fitted estimator.

8. The method of any one of the previous claims, wherein the structural, traffic and network features include: Internet Protocol, IP,-related activity; Domain Name System, DNS,-related activity; Document Object Model, DOM,-related features; Webpage-related features; and/or Hypertext Transfer Protocol, HTTP,-related features.

9. The method of any one of the previous claims, wherein the collecting step is performed continuously.

10. The method of any one of the previous claims, wherein the collecting step comprises crawling each website of the plurality of websites; retrieving data about each website's historical DNS activity; and retrieving data about the activity of a website's IP host.

11. A system for detecting online fake information items, the system comprising a cloud server configured to:
collect a plurality of information items from a plurality of websites;
extract structural, traffic and network features of each website of the plurality of websites, without analyzing any content of the information items, obtaining a feature dataset for each website as a result;
execute, a selection process on each feature dataset based on a performance and size criteria, obtaining a best-feature dataset for each website as a result;
generate, a filterlist including detected fake information items by means of executing a machine-learning classification process on each best-feature dataset.

12. The system of claim 11, wherein the cloud server is further configured to periodically update the generated filterlist, generating an updated filterlist as a result of each periodical update, wherein the generated filterlist or the updated filterlist being further enforced either by the cloud server or by a user's web browser, the latter being also included in the system.

13. A non-transitory computer readable storage media having instructions stored thereon that, when executed by a processor of a computing system, causes the computing system to perform operations comprising:
collecting a plurality of information items from a plurality of websites;
extracting structural, traffic and network features of each website of the plurality of websites, without analyzing any content of the information items, obtaining a feature dataset for each website as a result;
executing a selection process on each feature dataset based on a performance and size criteria, obtaining a best-feature dataset for each website as a result;
generating a filterlist including detected fake information items by means of executing a machine-learning classification process on each best-feature dataset.

14. The non-transitory computer readable storage media of claim 13, further comprising periodically updating the generated filterlist, generating an updated filterlist as a result of each periodical update, and enforcing the generated filterlist or the updated filterlist.

15. The non-transitory computer readable storage media of claim 13, comprising:
before the extracting step, preprocessing the collected plurality of information items, said preprocessing including summarizing HTTP status codes into groups; inputting missing data values to the collected plurality of information items; and/or normalizing scores within the collected plurality of information items; and/or
before the generating step, collecting different descriptions about the plurality of websites provided by different third parties, wherein for a description to be considered as reliable for a given website it needs to be similarly reported by a two or more different third parties.
